# EUROPÄISCHE PATENTSCHRIFT

(11) **EP 3 497 344 B1**
(45) Veröffentlichungstag und Bekanntmachung des Hinweises auf die Patenterteilung: **21.04.2021**
(21) Anmeldenummer: 17758819.1
(22) Anmeldetag: 10.08.2017
(51) Int. Cl.: F16C 7/02, F16C 9/02, F16C 33/10

(54) **RUNDLAGER UND PLEUEL**
ROUND SLIDING BEARING AND CONNECTING ROD
PALIER CIRCULAIRE ET BIELLE

(30) Priorität: 11.08.2016 DE 102016114952
(43) Veröffentlichungstag der Anmeldung: 19.06.2019
(73) Patentinhaber: Mauser-Werke Oberndorf Maschinenbau GmbH, 78727 Oberndorf a. N. (DE)
(72) Erfinder: GRAF, Jürgen, 78727 Oberndorf (DE); GRUHLER, Siegfried, 72189 Vöhringen (DE); ASSER, Frieder, 78056 Villingen-Schwenningen (DE)
(74) Vertreter: Rumrich, Gabriele
(86) Internationale Anmeldenummer: PCT/EP2017/070350
(87) Internationale Veröffentlichungsnummer: WO 2018/029307

(56) Entgegenhaltungen:
- WO-A1-2015/185451
- CN-Y- 2 931 909
- DE-A1- 3 614 532
- DE-A1-102011 083 134
- DE-A1-102012 207 518
- DE-U1-202012 013 324

## Beschreibung

Die Erfindung betrifft ein Rundlager gemäß dem Oberbegriff des Patentanspruches 1 und ein mit einem Rundlager ausgeführtes Pleuel.

Ein derartiges Rundlager kann beispielsweise eine Lager- oder Führungsbohrung eines Werkstückes, beispielsweise das kleine Pleuelauge eines Pleuels eines Verbrennungsmotors sein.

In der DE 10 2011 000 348 A1 ist ein Verfahren offenbart, bei dem eine Innenumfangsfläche eines Rundlagers zunächst mittels eines radial verstellbaren Feinbohrkopfes fein bearbeitet wird. Im Anschluss an das Feinbohren erfolgt dann zur Verringerung der Rautiefe eine Honbearbeitung. Dabei kann ein Spiralgleithonen eingesetzt werden, durch das die Bohrungsoberfläche mit einer Kreuzstruktur versehen wird.

Diese sich kreuzenden Riefen bilden ein Schmiermittelreservoir aus, so dass die Tribologie der Gleitbohrung aufgrund der erhöhten Schmiermittelhaltefähigkeit verbessert ist. Prinzipiell ist es auch bekannt, in die ein Rundlager ausbildende Buchse eines kleinen Pleuelauges runde Segmente (Dimples) einzuprägen - ein derartige Lösung hat den Nachteil, dass es im Bereich dieser runden, in sich geschlossenen Segmente zu einer Ölkohlebildung kommen kann. Die Ölversorgung der Schmiermittelstrukturen kann verbessert werden, indem das Pleuel als so genanntes Trapezpleuel ausgeführt ist, bei dem die kolbenstangenseitige Axiallänge größer ist als die Axiallänge des außen liegenden Bereiches des kleinen Pleuelauges ist, das zudem oval, d.h. in Ellipsenform ausgebildet ist. Durch die einwirkende Kolbenkraft wird der Kolbenbolzen im elastischen Bereich aufgrund der Ellipsenform des Pleuelauges etwas abgeplattet (circa 50 µm). Die Rückformung des Bolzens bei der Rückbewegung des Kolbens verursacht eine Art Pumpwirkung, durch die das Schmieröl zwischen die Lagerbuchse und den Bolzen gesaugt wird und somit ein verbesserter Schmierfilm aufbaubar ist. Bekannt ist es des Weiteren, beispielsweise bei einem buchsenlosen Pleuel die Schmiermittelstruktur als Rillen in die Umfangswandung des kleinen Pleuelauges einzubringen. Eine derartige Lösung ist beispielsweise in der WO 2015/185451 A1 offenbart.

In der WO 2013/064655 A1 der Anmelderin ist ein Verfahren beschrieben, bei dem in ein Lagerauge, beispielsweise in das kleine Pleuelauge eine Buchse eingewalzt wird. Derartige Buchsen haben eine vergleichsweise geringe Wandstärke, so dass der Kostenaufwand für die Buchsen gegenüber den vorbeschriebenen Lösungen minimal ist.

In der Druckschrift DE 10 2011 083 134 A1 wird ein Rundlager offenbart, welches eine Lagerfläche mit einer Umfangsfläche aufweist. Weiterhin wird eine Lagerbuchse in Trapezform beschrieben. Die darin eingebrachten "Schmiernuten" sind jedoch nicht umlaufend ausgebildet, sondern erstrecken sich lediglich über einen Bereich über 180°, vorzugsweise über einen Winkel zwischen 240° bis 300°.

Aus der Druckschrift DE 36 14 532 A1 ist eine Lagerung des Kolbenbolzens in der Pleuelstange mit einer Gleitlagerbuchse bekannt, bei der an mindestens einer Stirnseite der Gleitlagerbuchse in beidseitigem Winkelabstand zwischen etwa 40° bis 120° von der Lastzone mindestens eine taschenartige Vertiefung als Ölfangtasche ausgebildet ist und an der Innenfläche der Gleitlagerbuchse mindestens eine vom Grund der Ölfangtasche zumindest in Richtung zur Lastzone führende Öleinführung gebildet ist. Es ist keine spiralförmige Ölführungsnut vorgesehen.

Aus WO 2015 / 185451 ist ein Verfahren zum Bearbeiten von Lager- oder Führungsausnehmungen oder sonstigen Bohrungen bekannt, bei dem das Ritzen zur Ausbildung einer Schmiermittelhaltestruktur durch die Nebenschneide 24 erfolgt, wobei beim Feinbohren ein Vorschub (Einfahren) erfolgt, bei dem die Hauptschneide 20 in Eingriff ist. Beim Zurückfahren (Rückzug) des Werkzeugs erfolgt über die Nebenschneide 22 das Ritzen, wobei in Abhängigkeit vom Vorschub während der Zurückbewegung (Rückzug) die Spiralform ausgebildet wird. Diese Lagerausnehmungen weisen eine zylindrische Form auf und es werden keine Ölfangstellen erzeugt.

Bei in das kleine Pleuelauge eingepressten massiven Buchsen können zur Ausbildung des Schmiermittelvolumens Nuten eingeprägt werden, die entweder bogenförmig zusammenlaufen oder sich kreuzen - die Fertigung derartiger Buchsen ist aufwendig. Die Druckschrift DE 10 2012 207 518 A1 zeigt ein Gleitlager, bei dem durch eine Spiralriefe ein Schmiermittelreservoir ausgebildet ist. Eine ähnliche Lösung ist in der US 1 961 029 A1 offenbart, bei der ebenfalls in einem Lagerbereich eine Spiralnut zur Schmiermittelführung ausgeführt ist.
Das Vorsehen einer spiralförmigen Schmiermittelnut ist des Weiteren auch aus den Druckschriften US 1 961 029 und US 6 089 726 bekannt.
Bei all diesen Lösungen wird die Spiralnut vorab in die Innenumfangswandung einer Lagerbohrung oder einer Lagerbuchse eingebracht.
Bei der Verwendung von dünnwandigen Buchsen ist eine derartige Lösung nachteilig, da ein erheblicher vorrichtungstechnischer Aufwand erforderlich ist, um die Schmiermittelnut in eine dünnwandige Buchse einzubringen.

Demgegenüber liegt der Erfindung die Aufgabe zugrunde, ein Rundlager zu schaffen, das bei minimalem Kostenaufwand eine tribologisch optimierte Lagerfläche aufweist.

Diese Aufgabe wird durch ein Rundlager mit den Merkmalen des Patentanspruches 1 und ein Pleuel, dessen kleines Pleuelauge mit einer Spiralnut ausgeführt ist, gelöst. Vorteilhafte Weiterbildungen der Erfindung sind Gegenstand der Unteransprüche. Das erfindungsgemäße Rundlager hat eine Umfangsfläche, die eine Lagerfläche ausbildet und vorzugsweise fein bearbeitet ist. In dieser Umfangsfläche ist eine Riefenstruktur zur Ausbildung eines Ölhaltevolumens ausgebildet, wobei zumindest ein Riefenabschnitt in einer der Umfangskanten der Umfangsfläche mündet und wobei die Lagerfläche durch eine Lagerbuchse mit sich verändernder Axiallänge in Trapezform gebildet ist Dabei ist die Riefe zumindest abschnittsweise als umlaufende Spiralriefe ausgebildet, deren Endabschnitte jeweils in einer Vorderkante und in einer Rückkante der Umfangskanten münden, wobei der zumindest eine Riefenabschnitt entweder Teil der Spiralriefe oder aber zu dieser beabstandet ist und wobei Mündungsbereiche der
Riefenabschnitte und/oder der Spiralriefen zu Ölfangstellen erweitert sind.

Durch die umfangskantenseitig mündenden Endabschnitte der Spiralriefe oder des Riefenabschnittes wirkt die Mündung als Ölfangstelle, die die Ölzufuhr zu den Riefen optimieren. Der Mündungswinkel zur Umfangskante ist dabei im Hinblick auf die optimale Ölzufuhr ausgewählt. Auf diese Weise wird eine reibungsoptimierte Oberfläche einer Lauffläche für die Reibungspartner ausgebildet, wobei durch geeignete Wahl der Geometrie der Riefen das Verhältnis zwischen Ölhaltevolumen und Traganteil optimiert werden kann. Vorzugsweise münden die Riefen in einem spitzwinkligen Winkel zur Umfangskante, der deutlich weniger als 45° beträgt.

Die Lagerfläche des Rundlagers ist beispielsweise durch eine Buchse ausgebildet. Diese Buchse wird vorzugsweise eingewalzt, so dass vergleichsweise preiswerte Buchsen mit geringer Wandstärke verwendet werden.

Dabei wird erfindungsgemäß die Ölhaltestruktur erst nach dem Einsetzen der Buchsen in die jeweilige Bohrung ausgebildet, so dass die Buchse beim Einbringen der Ölhaltestruktur abgestützt ist. Bei einem Ausführungsbeispiel der Erfindung sind die Buchsen mit sich verändernder Axialbreite ausgeführt, so dass sie beispielsweise bei einem Trompetenpleuel einsetzbar sind.

Die Ölaufnahme ist weiter verbessert, wenn zumindest ein Riefenabschnitt beidseitig in einer Umfangskante mündet.

Dabei wird es besonders bevorzugt, wenn der zumindest eine Riefenabschnitt schräg zur Umfangsrichtung angestellt ist.

Bei einer Variante der Erfindung ist vorgesehen, dass der zumindest eine Riefenabschnitt und die Spiralriefe auf einem gemeinsamen Spiralgang (Windung) liegen. Die Ölhaltefähigkeit lässt sich weiter verbessern, wenn zusätzlich zu den vorbeschriebenen Riefenabschnitten/Spiralriefen noch zumindest ein Kreuzriefenabschnitt und/oder eine Kreuzspiralriefe vorgesehen ist, die den zumindest eine Riefenabschnitt und/oder die Spiralriefe kreuzen. Die Ölzufuhr zu den Ölhaltestrukturen ist verbessert, wenn die Mündungsbereiche der Spiralriefe bzw. der Riefenabschnitte zu Ölfangstellen erweitert sind.

Ein weitestgehend symmetrischer Aufbau und somit eine vollflächige Schmierung der Lagerfläche ist gewährleistet, wenn Kreuzungen der Spiralriefen mit den Kreuzspiralriefen auf einer achsparallelen Linie liegen, die vorzugsweise in einem Bereich der Buchse mit der größten oder geringsten Axiallänge ausgebildet ist.

Die Ganghöhe der Spirale liegt bei einem bevorzugten Ausführungsbeispiel zwischen 0,5 mm und 5 mm. Eine derartige Ganghöhe ist beispielsweise bei Pleueln von Verbrennungsmotoren vorteilhaft.

Die Riefentiefe kann so gewählt sein, dass sich ein Ölhaltevolumen zwischen 2 und 20 µm³/mm² Riefenfläche ausbildet. Die Riefen und die Spirale können durch Drehen, Bohren, Drücken, Walzen, Laserbearbeitung oder dergleichen ausgebildet sein. Wie vorstehend erwähnt, erfolgt diese Bearbeitung vorzugsweise nach dem Einsetzen. Dabei wird es besonders bevorzugt, wenn die Lagerbuchse eingewalzt ist.

Das erfindungsgemäße Konzept lässt sich besonders gut bei einem kleinen Pleuelauge eines Pleuels realisieren. Selbstverständlich kann das erfindungsgemäße Rundlager auch bei anderen Werkstücken vorgesehen sein. Dabei ist in der Lagerfläche des Pleuelauges (mit Buchse oder ohne Buchse) eine Ölhaltestruktur zur Ausbildung eines Ölhaltevolumens derart ausgebildet, dass ein Riefenabschnitt der Ölhaltestruktur in einer der Umfangskanten der Umfangsfläche mündet. Erfindungsgemäß ist eine umlaufende Spiralriefe vorgesehen, deren Endabschnitte jeweils in einer der Umfangskanten münden, wobei der zumindest eine Riefenabschnitt ein Teil der Spiralriefe oder beabstandet dazu ist. Wie vorstehend erläutert, kann diese Ölhaltestruktur direkt in der Innenumfangswandung des kleinen Pleuelauges ausgebildet sein oder aber auch in einer Buchse, die in das kleine Pleuelauge eingesetzt ist.

Durch die erfindungsgemäße Lösung lässt sich ein feinbearbeitetes Rundlager mit eine reibungsoptimierten Oberfläche einer Lauffläche für einen Reibungspartner ausbilden. Diese reibungsoptimierte Oberfläche weist eine Ölhaltestruktur mit einem Ölhaltevolumen auf, das entsprechend den Anforderungen projektiert ist. Als Parameter dienen dabei die Anordnungsgeometrie und der Riefenabstand der Struktur, die den Traganteil und das Ölhaltevolumen der Oberfläche bestimmen. Die Ölhaltestrukturen (Spiralriefen und Riefenabschnitte) können auch entlang ihrer Länge variabel ausgeführt sein, so dass beispielsweise die Tiefe und die Breite variiert.

Die Ölstruktur kann beispielsweise spanend, durch Laserbearbeitung oder durch Drücken/Walzen eingebracht werden. Besonders wirtschaftlich ist eine spanende Feinbearbeitung, wobei ein Feinbohren mittels einer Primärschneide eines Werkzeuges erfolgen kann, und während des Rückzugs über eine Sekundärschneide die Riefen ausgebildet werden. Dieses Ritzen der Riefen kann dabei ohne Aufwurf ausgebildet werden. Bei buchsenlosen Rundlagern können die Riefen auch durch Sonderschneiden ausgebildet werden.

Die Ausbildung von Ölfangstellen oder sonstigen Riefen kann bei Verwendung eines winkelgesteuerten Werkzeuges bei einem Vorfeinbohren oder beim Feinbohren ausgebildet werden.

Aufgrund der kontinuierlichen Ölbewegung, die durch die offenen Endabschnitte der Riefen und das eingangs genannte Pumpen erzeugt wird, kann eine Ölkohlebildung zuverlässig vermieden werden. Die angepassten Ölforderstrukturen erlauben des Weiteren eine dünne Buchsenkonstruktion. Selbstverständlich kann - wie vorstehend erwähnt - das Rundlager auch buchsenlos ausgeführt sein.

Bevorzugte Ausführungsbeispiele der Erfindung werden im Folgenden anhand schematischer Zeichnungen näher erläutert.

Es zeigen:
Figur 1 eine Teildarstellung eines Pleuels, dessen kleine Pleuelauge als erfindungsgemäßes Rundlager ausgebildet ist; Figur 2 eine Abwicklung einer Lagerbuchse des Rundlagers gemäß Figur 1;
Figur 3 ein weiteres Ausführungsbeispiel einer Lagerbuchse für ein Rundlager gemäß Figur 1 und Figur 4 eine dritte Variante einer Lagerbuchse eines Rundlagers gemäß Figur 1.

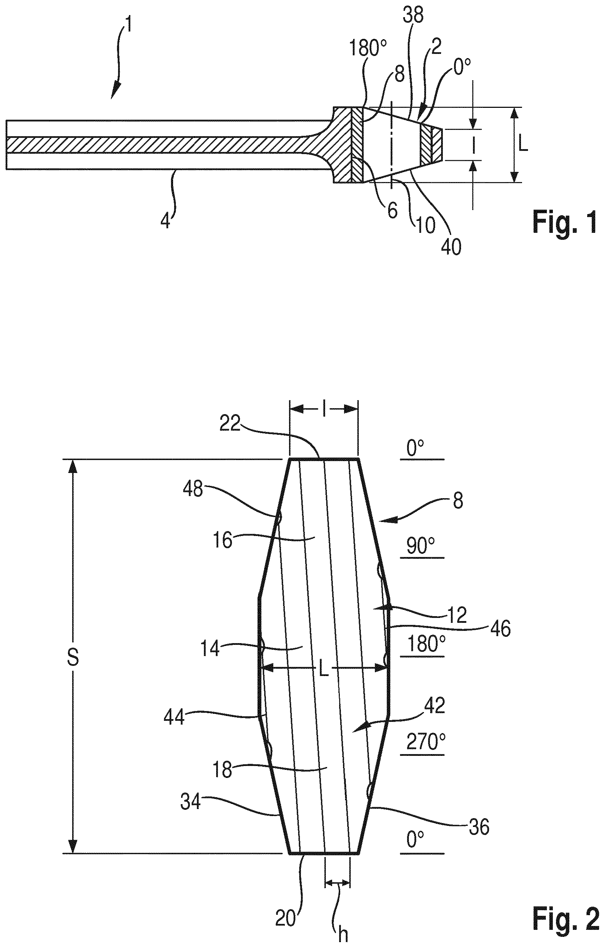

Figur 1 zeigt eine geschnittene, schematische Teildarstellung eines Pleuels 1 eines Verbrennungsmotors, wobei lediglich ein kleines Pleuelauge 2 und ein Teil einer Pleuelstange 4 dargestellt sind. Das Pleuelauge 2 ist als Trapez-Pleuelauge ausgeführt, bei dem der kolbenstangenseitige Umfangsabschnitt des Pleuelauges mit größerer Axiallänge L als der davon entfernte Umfangsabschnitt ausgeführt ist, der eine Axiallänge I aufweist. Anstelle eines derartigen Trapez-Pleuels kann auch ein Henkelkorbpleuel verwendet werden, wie es in der oben genannten WO 2013/064655 gezeigt ist. In ein Pleuelauge 6 des kleinen Pleuelauges 2 ist eine Lagerbuchse 8 eingesetzt, deren Kontur an die Trapezgeometrie des Pleuelauges 2 angepasst ist. Das erfindungsgemäße Rundlager 1 ist somit durch die in das Pleuelauge 2 eingesetzte Lagerbuchse 8 ausgebildet.

Diese Lagerbuchse 8 wird - wie beispielsweise in der WO 2013/064655 A1 beschrieben - aus einem dünnwandigen Blechzuschnitt gebogen und dann mittels eines Umformwerkzeuges, insbesondere eines Walzwerkzeuges in das kleine Pleuelauge 2 eingewalzt. Dieses kann dabei - wie eingangs beschrieben - elliptisch ausgebildet sein.

Figur 2 zeigt eine Abwicklung der Lagerbuchse 8, die für eine Trapez-Pleuel geeignet ist. Bei Verwendung eines Henkelkorbpleuels oder eines konventionellen Pleuels mit zylinderförmigem Pleuelauge werden entsprechend angepasste Lagerbuchsen verwendet.

Nach dem Einwalzen der Lagerbuchse 8 wird deren die Lagerfläche ausbildende Innenumfangsfläche mittels eines geeigneten Feinbohrwerkzeuges, beispielsweise eines Feinbohrkopfes, wie er in der WO 2015/185451 A1 offenbart ist, feinbearbeitet. Diese Feinbearbeitung erfolgt dabei mittels einer Hauptschneide. Während des Rückzugs des Feinbohrwerkzeuges wird dann über eine Nebenschneide oder dergleichen oder eine eigene Rückzug-/Sonderschneide eine Riefenstruktur ausgebildet, die im Folgenden Ölhaltestruktur 12 genannt ist, die dann entsprechend das Ölhaltevolumen des Rundlagers bildet. Die in Figur 2 in der Abwicklung dargestellte Lagerbuchse 8 hat einen Mittelabschnitt 14 mit einer Breite L, dessen Seitenkanten etwa parallel zu einander verlaufen. An diesem Mittelabschnitt 14 schließt sich beidseitig jeweils ein konisch verjüngter Endabschnitt 16, 18 an, der sind zu Stirnkanten 20, 22 hin von der Breite L auf das Maß I in Figur 2 verringert.

Die gestreckte Länge S des Blechzuschnittes für die Lagerbuchse 8 entspricht dabei dem Umfang des Lagerauges 6 (vorne Pleuelauge 6). Die Wandstärke des Blechzuschnittes ist relativ gering und liegt beispielsweise im Bereich von etwa 1 mm. Der Blechzuschnitt gemäß Figur 2 wird dann in einem ersten Arbeitsgang rund gewalzt, wobei die beiden Stirnkanten 20, 22 entlang eines Stoßes bündig an einander liegen oder aber beim sich anschließenden Einwalzprozess in Anlage gebracht werden. Ein Verschweißen oder stoffschlüssiges Verbinden erfolgt nicht.

Aufgrund der geringen Kräfte beim Einwalzen muss der Blechzuschnitt nicht - wie bei herkömmlichen Lösungen erforderlich - mit einer Oberflächenvergütung gegen eine Beschädigung geschützt werden.

Nach dem Einwalzen der rund gewalzten Lagerbuchse 8 in das Lagerauge 6 wird - wie vorstehend beschrieben - mittels des Feinbohrwerkzeuges die Umfangsfläche der Lagerbuchse 8 zunächst feinbearbeitet und dann die Ölhaltestruktur 12 ausgebildet. Diese Riefenstruktur kann dabei beim Rückzug des Feinbohrwerkzeuges über eine Nebenschneide oder eine eigene Rückzugschneide ausgebildet werden. Dabei ist der Vorschub so gewählt, dass sich eine Spiralriefe 24 mit einer Spiralganghöhe h ausbildet. Diese Ganghöhe kann beispielsweise 4 mm betragen.

Einige dieser Spiralgänge bilden bei gerollter Lagerbuchse 8 einen durchgängigen Spiralgangabschnitt. Andere Spiralgänge (Riefenabschnitte) laufen in eine Vorderkante 34 bzw. einer Rückkante 36 ein und auch dort wieder aus und öffnen sich somit beidseitig zu Kanten 34 bzw. 36.

In den Figuren 1 und 2 sind Umfangswinkel (0°, 90°, 180°, 270°) der Lagerbuchse 8 eingezeichnet. Die beiden Stirnkanten 20, 22 befinden sich dabei in der 0°-Position, die in der Darstellung gemäß Figur 1 in dem Umfangsabschnitt mit der geringeren Axiallänge I angeordnet ist. Dementsprechend liegt die größte Axiallänge L in dem kolbenstangenseitigen Bereich des Lagerauges 6, der bei 180° liegt. Unter der Annahme, dass das Feinbohrwerkzeug in der Darstellung gemäß Figur 2 während des Rückzugs zur Ausbildung der Riefenstruktur 12 von links her in die Lagerbuchse 8 einfährt, beginnt die spanabhebende Bearbeitung beim Umfangswinkel 180°. Bei dem gewählten Steigungswinkel, der während der gesamten Bearbeitung gleichbleibt, gelangt das Feinbohrwerkzeug in etwa bei der Position 270° außer Eingriff, da der Anstellwinkel der Vorderkante 34 größer ist als der Steigungswinkel. Während der weiteren Rotation gelangt das Feinbohrwerkzeug in etwa bei der Position 45° wiederum vorderseitig in Schneideingriff, so dass dann eine spiralförmige Riefenstruktur ausgebildet wird. Diese Spiralriefe 42 endet dann an der Rückkante 36 im Bereich zwischen 270° und 0°. Bei der weiteren Rotation des Feinbohrwerkzeuges gelangt die Rückzugschneide wiederum in etwa bei der Position 90° in Schneideingriff und tritt dann bei etwas mehr als 180° aus. D.h. während dieser Bearbeitung in Rückzugrichtung wird eine durchgehende Spiralriefe 42 ausgebildet, deren Endabschnitte einerseits in der Vorder- kante 34 und andererseits in der Rückkante 36 münden. Zusätzlich werden zwei

Riefenabschnitte 44, 46 ausgebildet, von denen der eine Riefenabschnitt 44 beidseitig in der Vorderkante 34 und der andere Riefenabschnitt 46 beidseitig in der Rückkante 36 mündet. Die Reifenabschnitte 44, 46 und die Spiralriefe 42 liegen auf einer Spirale.

Bei dem dargestellten Ausführungsbeispiel sind die jeweiligen Mündungsbereiche zu Ölfangstellen 48 erweitert, von denen in Figur 2 lediglich eine mit einem Bezugszeichen versehen ist. Diese Ölfangstellen 48 fördern die Zuführung von Öl in die Ölhaltestruktur 12, so dass ein stetiger Ölaustausch gewährleistet ist und somit eine Ölverkohlung vermieden werden kann.

Wie in Figur 2 dargestellt, erfolgen der Einstich und der Ausstich jeweils bei 180°. Die Tiefe der Riefen beträgt beim dargestellten Ausführungsbeispiel etwa 5 µm. Die Steigung ist während der gesamten Bearbeitung konstant. Selbstverständlich kann auch durch Wahl des Vorschubs und auch der Einstichtiefe eine variable Ölhaltestruktur ausgebildet werden, deren Steigung, Tiefe und Breite in Abhängigkeit vom gewünschten Traganteil und dem Ölhaltevolumen gewählt ist.

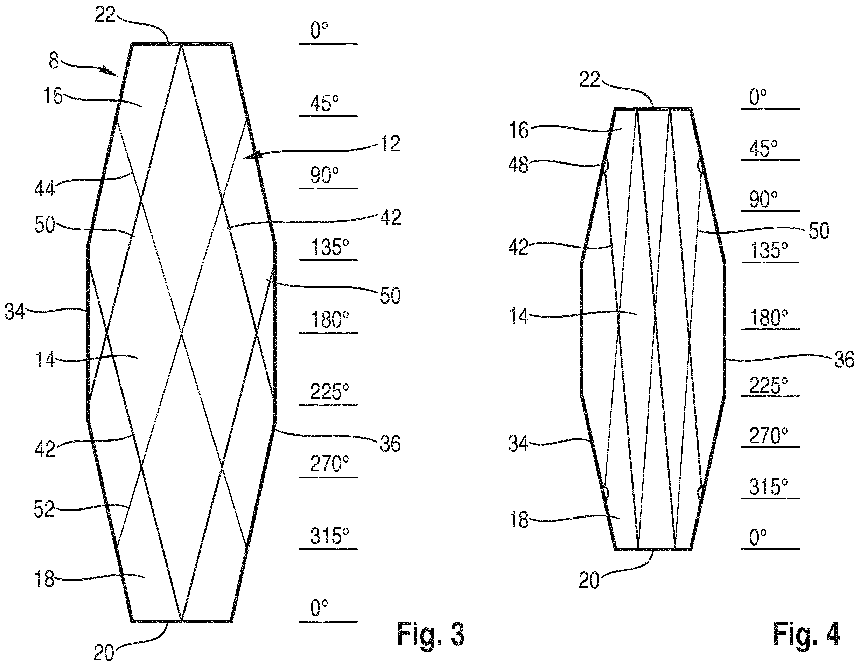

Figur 3 zeigt eine Variante des Ausführungsbeispiels gemäß Figur 2. Bei diesem Ausführungsbeispiel hat die Ölhaltestruktur 12 vier Riefen, von denen zwei von der Vorderkante 34 und zwei von der Rückkante 36 herausgebildet sind. D.h. diese Ölhaltestruktur 12 kann zum einen während des Rückzugs und zum anderen während einer Vorwärtsbewegung des Feinbohrwerkzeuges ausgebildet werden. Unter der Annahme, dass der Rückzug in der Darstellung gemäß Figur 3 von links nach rechts erfolgt, können dann die in der Rückkante 36 beginnenden Riefen während der Feinbearbeitung durch Zustellung des Feinbohrwerkzeuges oder aber auch bei einer sich an die Rückzugbewegung anschließenden weiteren Vorwärtsbewegung ausgebildet werden. Die insgesamt sechs Ölfangstellen 48 sind über die Länge der Kanten 34, 36 verteilt.

Bei dem zuvor beschriebenen Ausführungsbeispiel hat die Ölhaltestruktur 12 eine umlaufende Spiralriefe 42 (Figur 2). Bei dem in Figur 3 dargestellten Ausführungsbeispiel beginnt eine erste Spiralriefe 42 an der Vorderkante 34 bei etwa 135° und endet an der Rückkante 36 bei etwa 225°. Eine zweite Spiralriefe ist lediglich als Riefenabschnitt 44 ausgebildet, der etwa bei dem Umfangswinkel 45° an der Vorderkante 34 beginnt und rechts steigend beim Umfangswinkel 315° an der Rückkante 36 endet. Eine dritte Spiralriefe 50 ist dann wieder umlaufend ausgebildet und beginnt bei etwa 135° an der Rückkante 36 und endet bei etwa 225° an der Vorderkante 34. Eine vierte Spiralriefe ist nur als Riefenabschnitt 52 ausgebildet, der an der Rückkante 36 bei etwa 45° beginnt und in der Vorderkante 34 bei etwa 315° endet. D.h. es wird eine Kreuzstruktur ausgebildet, wobei die Spiralriefen 42, 50 und die Riefenabschnitte 44, 52 jeweils an den Kanten 34, 36 beginnen oder enden. Die Steigung ist etwas größer als beim Ausführungsbeispiel gemäß Figur 2 gewählt. Dabei kann die Steigung von Spiralriefe zu Spiralriefe unterschiedlich sein - im Verlauf der Signalriefen ist die Steigung jedoch konstant. Die Kreuzungsbereiche sind mittig im Mittelabschnitt 14, im Bereich der Stirnkanten 20, 22 und etwa mittig (in Umfangsrichtung gesehen) in den Endabschnitten 16, 18 ausgebildet. Die Mündungen der Spiralriefen 42, 50 und der Riefenabschnitte 44, 52 liegen paarweise in der gleichen Horizontalebene (Ansicht nach Figur 3) an der Kanten 34, 36.

Bei dem Ausführungsbeispiel gemäß Figur 3 sind keine Ölfangstellen 48 vorgesehen. Selbstverständlich können diese auch beim Ausführungsbeispiel gemäß Figur 3 ausgebildet werden. Figur 4 zeigt eine Variante des Ausführungsbeispiels gemäß Figur 3, bei der zwei umlaufende Spiralriefen 42 und 50 vorgesehen sind. Die Spiralriefe 42 erstreckt sich von der Vorderkante 34 bei etwa 45° beginnend und endet bei etwa 315° an der Rückkante 36. Diese Spiralriefe 42 entspricht somit derjenigen aus Figur 2. Die weitere Spiralriefe 50 beginnt etwa bei der Position 45° an der Rückkante 36 und läuft beim Umfangswinkel von etwa 315° an der Vorderkante 34 aus. Die Spiralriefen 42, 50 kreuzen einander, wobei Kreuzungsbereiche im Mittelabschnitt 14 und an den Stirnkanten 20,22 ausgebildet sind. Die Mündungsbereiche liegen somit alle bei 45° und 315°.

Bei diesem Ausführungsbeispiel sind wiederum die Mündungsbereiche - ähnlich wie beim Ausführungsbeispiel gemäß Figur 2 - mit Ölfangstellen 48 ausgebildet. Diese mündungsseitigen Erweiterungen können beispielsweise mittels Aussteuerung des Feinbohrwerkzeuges oder durch einen gesonderten Arbeitsgang ausgebildet werden. Die Steigung der beiden Spiralriefen 42, 50 ist gleich ausgeführt, wobei der Steigungswinkel geringer als beim Ausführungsbeispiel gemäß Figur 3 ausgebildet ist. Die Ganghöhe entspricht in etwa derjenigen des Ausführungsbeispiels gemäß Figur 2.

Selbstverständlich können auch Strukturen mit mehr oder weniger Spiralriefen/Riefenabschnitten ausgeführt werden. Die Steigungswinkel, die Riefenbreite und die Riefentiefe werden je nach einzustellendem Verhältnis von Traganteil und Ölhaltevolumen gewählt.

Offenbart ist ein Rundlager, beispielsweise eines Pleuels, mit einer Umfangsfläche, in der eine Ölhaltestruktur ausgebildet ist, die in Umfangskanten der Umfangsfläche mündet.

### Bezugszeichenliste

1 Pleuel
2 Pleuelauge
4 Pleuelstange
6 Lagerauge
8 Lagerbuchse
10 Pleuelaugenachse
12 Ölhaltestruktur
14 Mittelabschnitt
16 Endabschnitt
18 Endabschnitt
20 Stirnkante
22 Stirnkante
34 Vorderkante
36 Rückkante
38 Umfangskante
40 Umfangskante
42 Spiralriefe
44 Riefenabschnitt
46 Riefenabschnitt
48 Ölfangstelle
50 Spiralriefe
52 Riefenabschnitt

## Patentansprüche

1. Rundlager mit einer eine Lagerfläche ausbildenden Umfangsfläche, die vorzugsweise feinbearbeitet ist und in der eine Ölhaltestruktur (12) zur Ausbildung eines Ölhaltevolumens vorgesehen ist, wobei zumindest ein Riefenabschnitt (44, 46, 52) in einer der Umfangskanten der Umfangsfläche mündet, wobei die Lagerfläche durch eine Lagerbuchse (8) mit sich verändernder Axiallänge (L, I) in Trapezform gebildet ist, **gekennzeichnet durch** zumindest eine umlaufende Spiralriefe (42, 50), deren Endabschnitte jeweils in einer Vorderkante (34) und in einer Rückkante (36) der Umfangskanten münden, wobei der zumindest eine Riefenabschnitt (44, 46, 52) ein Teil der Spiralriefe oder beabstandet dazu ist, wobei Mündungsbereiche der Riefenabschnitte (44, 46, 52) und/oder der Spiralriefen (42, 50) zu Ölfangstellen (48) erweitert sind.

2. Rundlager nach Patentanspruch 1, wobei zumindest ein Riefenabschnitt (44, 46) beidseitig in der Umfangskante mündet.

3. Rundlager nach einem der vorhergehenden Patentansprüche, wobei der zumindest eine Riefenabschnitt (44, 46, 52) schräg zur Umfangsrichtung angestellt ist.

4. Rundlager nach einem der vorhergehenden Patentansprüche, wobei der zumindest eine Riefenabschnitt (44, 46, 52) und die Spiralriefe (42, 50) auf einem Spiralgang liegen.

5. Rundlager nach einem der vorhergehenden Patentansprüche, mit einem kreuzenden Riefenabschnitt (52) und/oder einer kreuzenden Spiralriefe (50), die den zumindest einen Riefenabschnitt (44, 46) und/oder die Spiralriefe (42) kreuzen.

6. Rundlager nach Anspruch 5, wobei zumindest einige Kreuzungen der Spiralriefen (42, 50) auf einer achsparallelen Linie liegen, die vorzugsweise in einem Bereich der Lagerbuchse (8) mit größter oder geringster Axiallänge (L, I) ausgebildet ist.

7. Rundlager nach einem der vorhergehenden Patentansprüche, wobei eine Ganghöhe (h) der Spiralriefen (42, 50, 54) wesentlich kleiner als die maximale Axiallänge (L) der Lagerbuchse (8) ist.

8. Rundlager nach Patentanspruch 8, wobei die Ganghöhe (h) zwischen 0,5 mm und 5 mm beträgt.

9. Rundlager nach einem der vorhergehenden Patentansprüche, wobei eine Riefentiefe so gewählt ist, dass sich ein Ölhaltevolumen zwischen 2 und 20 m³/mm² Riefenfläche ausbildet.

10. Rundlager nach einem der vorhergehenden Patentansprüche, wobei die Riefen durch Drehen, Bohren, Drücken, Walzen oder Laserbearbeitung ausgebildet sind.

11. Rundlager nach einem der vorhergehenden Patentansprüche, wobei die Lagerbuchse (8) eingewalzt ist.

12. Rundlager nach einem der vorhergehenden Patentansprüche, wobei dieses das kleine Lagerauge eines Pleuels ausbildet.

13. Pleuel mit einem Rundlager nach Anspruch 1, dessen kleines Pleuelauge (2) eine, eine Lagerfläche ausbildende Umfangsfläche hat, in der eine Ölhaltestruktur (12) zur Ausbildung eines Ölhaltevolumens vorgesehen ist, wobei zumindest ein Riefenabschnitt (44, 46, 42) in einer der Umfangskanten der Umfangsfläche mündet, **gekennzeichnet durch** zumindest eine umlaufende Spiralriefe (42, 50), deren Endabschnitte jeweils in einer der Umfangskanten münden, wobei der zumindest eine Riefenabschnitt (44, 46, 52) ein Teil der Spiralriefe oder beabstandet dazu ist.

14. Verfahren zur Herstellung eines Rundlagers mit einer eine Lagerfläche ausbildenden Umfangsfläche, die feinbearbeitet ist und in der eine Ölhaltestruktur zur Ausbildung eines Ölhaltevolumens vorgesehen ist, wobei die Lagerfläche durch eine Lagerbuchse (8) mit sich verändernder Axiallänge (L, I) in Trapezform ausgebildet ist, **dadurch gekennzeichnet, dass** ein Feinbohren mittels einer Primärschneide eines Werkzeuges erfolgt und während des Rückzugs über eine Sekundärschneide die Riefen ausgebildet werden, wobei die Sekundärschneide in Form einer Nebenschneide oder einer eigenen Rückzugschneide ausgebildet ist und eine Riefenstruktur in Form einer Ölhaltestruktur (12) ausbildet, die dann entsprechend das Ölhaltevolumen des Rundlagers bildet, wobei zumindest ein Riefenabschnitt (44, 46, 52) in einer der Umfangskanten der Umfangsfläche mündet und zumindest eine umlaufende Spiralriefe (42, 50) erzeugt wird, deren Endabschnitte jeweils in einer Vorderkante (34) und in einer Rückkante (36) Umfangskanten münden, wobei Mündungsbereiche der Riefenabschnitte (44, 46, 52) und/oder der Spiralriefen (42, 50) zu Ölfangstellen (48) erweitert werden

## Claims

1. Round bearing having a circumferential surface forming a bearing surface, which circumferential surface is preferably finely machined and in which an oil-retaining structure (12) is provided for forming an oil-retaining volume, wherein at least one groove section (44, 46, 52) opens into one of the circumferential edges of the circumferential surface, wherein the bearing surface is formed by a bearing bush (8) having a varying axial length (L, I) in trapezoidal form, **characterized by** at least one circumferential spiral groove (42, 50), the end sections of which open in each case into a leading edge (34) and into a trailing edge (36) of the circumferential edges, wherein the at least one groove section (44, 46, 52) is part of the spiral groove or spaced therefrom, wherein orifice regions of the groove sections (44, 46, 52) and/or of the spiral grooves (42, 50) are widened to form oil-trapping points (48).

2. Round bearing according to claim 1, wherein at least one groove section (44, 46) opens into the circumferential edge on both sides.

3. Round bearing according to one of the preceding claims, wherein the at least one groove section (44, 46, 52) is set obliquely to the circumferential direction.

4. Round bearing according to one of the preceding claims, wherein the at least one groove section (44, 46, 52) and the spiral groove (42, 50) lie on a spiral flight.

5. Round bearing according to one of the preceding claims, comprising an intersecting groove section (52) and/or an intersecting spiral groove (50) which intersect the at least one groove section (44, 46) and/or the spiral groove (42).

6. Round bearing according to claim 5, wherein at least some intersections of the spiral grooves (42, 50) lie on an axis-parallel line, which is preferably formed in a region of the bearing bush (8) with the greatest or least axial length (L, I).

7. Round bearing according to one of the preceding claims, wherein a pitch (h) of the spiral grooves (42, 50, 54) is substantially smaller than the maximum axial length (L) of the bearing bush (8).

8. Round bearing according to claim 8, wherein the pitch (h) is between 0.5 mm and 5 mm.

9. Round bearing according to one of the preceding claims, wherein a groove depth is selected such that an oil-retaining volume of between 2 and 20 m³/mm² groove area is formed.

10. Round bearing according to one of the preceding claims, wherein the grooves are formed by turning, drilling, spinning, rolling or laser machining.

11. Round bearing according to one of the preceding claims, wherein the bearing bush (8) is rolled in.

12. Round bearing according to one of the preceding claims, wherein said bearing forms the small bearing eye of a connecting rod.

13. Connecting rod having a round bearing according to claim 1, the small connecting rod eye (2) of which has a circumferential surface forming a bearing surface, in which an oil-retaining structure (12) is provided for forming an oil-retaining volume, wherein at least one groove section (44, 46, 42) opens into one of the circumferential edges of the circumferential surface, **characterized by** at least one circumferential spiral groove (42, 50) whose end sections open in each case into one of the circumferential edges, wherein the at least one groove section (44, 46, 52) is part of the spiral groove or spaced therefrom.

14. Method for producing a round bearing having a circumferential surface which forms a bearing surface and which is finely machined and in which an oil-retaining structure is provided for forming an oil-retaining volume, wherein the bearing surface is formed by a bearing bush (8) having a varying axial length (L, I) in trapezoidal form, **characterized in that** fine boring is carried out by means of a primary cutting edge of a tool and the grooves are formed during retraction via a secondary cutting edge, wherein the secondary cutting edge is formed in the form of a minor cutting edge or the like or its own retraction cutting edge and forms a groove structure in the form of an oil-retaining structure (12) which then correspondingly forms the oil-retaining volume of the round bearing, wherein at least one groove section (44, 46, 52) opens into one of the circumferential edges of the circumferential surface and at least one circumferential spiral groove (42, 50) is produced, the end sections of which open in each case into a leading edge (34) and into a trailing edge (36) of the circumferential edges, wherein orifice regions of the groove sections (44, 46, 52) and/or of the spiral grooves (42, 50) are widened to form oil-trapping points (48).

## Revendications

1. Palier rond avec une surface de circonférence formant une portée de palier, de préférence usinée par usinage de précision et dans laquelle est prévue une structure de rétention d'huile (12) destinée à former un volume de rétention d'huile, dans lequel au moins un segment de rainure (44, 46, 52) débouche dans l'un des bords circonférentiels de la surface de circonférence, la portée de palier étant formée sous une forme trapézoïdale par un coussinet (8) de longueur axiale variable (L, I), **caractérisé en ce qu'**il comporte au moins une rainure en spirale (42, 50) continue, dont les segments d'extrémité débouchent chacun dans un bord antérieur (34) et dans un bord postérieur (36) parmi les bords circonférentiels, l'au moins un segment de rainure (44, 46, 52) faisant partie de la rainure en spirale ou étant éloigné de celle-ci, des zones où débouchent les segments de rainure (44, 46, 52) et/ou les rainures en spirale (42, 50) étant élargies pour former des points de collecte d'huile (48).

2. Palier rond selon la revendication 1, dans lequel au moins un segment de rainure (44, 46) débouche des deux côtés dans le bord circonférentiel.

3. Palier rond selon l'une des revendications précédentes, dans lequel l'au moins un segment de rainure (44, 46, 52) est placé à l'oblique par rapport à la circonférence.

4. Palier rond selon l'une des revendications précédentes, dans lequel l'au moins un segment de rainure (44, 46, 52) et la rainure en spirale (42, 50) se trouvent sur un même trajet en spirale.

5. Palier rond selon l'une des revendications précédentes, avec un segment de rainure (52) croisé et/ou une rainure en spirale (50) croisée qui croisent l'au moins un segment de rainure (44, 46) et/ou la rainure en spirale (42).

6. Palier rond selon la revendication 5, dans lequel au moins certains croisements des rainures en spirale (42, 50) se trouvent sur une ligne parallèle à l'axe, qui est formée de préférence dans une région du coussinet (8) ayant la plus grande ou la plus petite longueur axiale (L, I).

7. Palier rond selon l'une des revendications précédentes, dans lequel une hauteur de spires (h) des rainures en spirale (42, 50, 54) est sensiblement plus petite que la longueur axiale maximale (L) du coussinet (8).

8. Palier rond selon la revendication 8, dans lequel la hauteur de spire (h) est comprise entre 0,5 mm et 5 mm.

9. Palier rond selon l'une des revendications précédentes, dans lequel une profondeur de rainure est choisie de telle façon qu'un volume de rétention d'huile de 2 à 20 |m|[R1]³/mm² de surface de rainure se forme.

10. Palier rond selon l'une des revendications précédentes, dans lequel les rainures sont formées par tournage, perçage, emboutissage, laminage ou par laser.

11. Palier rond selon l'une des revendications précédentes, dans lequel le coussinet (8) est formé par laminage.

12. Palier rond selon l'une des revendications précédentes, qui forme la petite tête d'une bielle.

13. Bielle avec un palier rond selon la revendication 1, dont la petite tête (2) a une surface de circonférence formant une portée de palier dans laquelle est prévue une structure de rétention d'huile (12) destinée à former un volume de rétention d'huile, au moins un segment de rainure (44, 46, 42) débouchant dans l'un des bords circonférentiels de la surface de circonférence, **caractérisée en ce qu'**elle comporte au moins une rainure en spirale (42, 50) continue dont les segments d'extrémité débouchent chacun dans un des bords circonférentiels, l'au moins un segment de rainure (44, 46, 52) faisant partie de la rainure en spirale ou en étant éloigné.

14. Procédé pour la fabrication d'un palier rond avec une surface de circonférence formant une portée de palier, qui est de préférence usinée par usinage de précision et dans laquelle est prévue une structure de rétention d'huile, la portée de palier étant formée sous une forme trapézoïdale par un coussinet (8) de longueur axiale variable (L, I), **caractérisé en ce qu'**un perçage fin est réalisée au moyen d'une arête de coupe primaire d'un outil et les rainures sont formées pendant le retrait à l'aide d'une arête de coupe secondaire, l'arête de coupe secondaire étant formée par une arête de coupe accessoire ou similaire ou par une arête de coupe de retrait spécifique et produisant une structure de rainure formant une structure de rétention d'huile (12) qui forme ensuite le volume de rétention d'huile du palier rond, au moins un segment de rainure (44, 46, 52) débouchant dans un des bords circonférentiels de la surface de circonférence et au moins une rainure en spirale (42, 50) continue étant produite, dont les segments d'extrémité débouchent chacun dans un bord antérieur (34) ou un bord postérieur (36) parmi les bords circonférentiels, les zones où débouchent les segments de rainure (44, 46, 52) et/ou les rainures en spirale (42, 50) étant élargies pour former des points de collecte d'huile (48).
